# EUROPEAN PATENT APPLICATION

(11) **EP 4 534 241 A1**
(43) Date of publication of application: **09.04.2025**
(21) Application number: 24201680.6
(22) Date of filing: 20.09.2024
(51) Int. Cl.: B23Q 11/08, B23Q 39/04

(54) **PROCESSING SYSTEM**

(30) Priority: 05.10.2023 JP 2023173640
(71) Applicant: Sugino Machine Limited, Namerikawa City, Toyama 936-8577 (JP)
(72) Inventor: Haremaki, Hiroki, Namerikawa City, Toyama, 9368577 (JP)
(74) Representative: Global IP Europe Patentanwaltskanzlei

(57) **Abstract**

Provided is a processing system including a plurality of processing machine units that can be easily installed. The processing system (1) includes: a processing chamber unit (100) configured to accommodate a workpiece (10), the processing chamber unit (100) including, a wall portion (11) having a window (21), and a conveyor (30) surrounded by the wall portion (11), the conveyor (30) configured to grip and convey the workpiece (10) to a processing position (40) opposing to the window (21); and a processing machine unit (200) disposed to cover the window (21), the processing machine unit (200) including a processing part (60) configured to process the workpiece (10) located at the processing position (40) through the window (21).

## Description

### BACKGROUND

### 1. Technical Field

The present invention relates to a processing system including a plurality of processing machine units.

### 2. Description of the Background

A processing system for processing a workpiece by a plurality of processing parts is known (JP-H08-215976 A). In this processing system, the plurality of processing parts are disposed around a handling device that grips the workpiece.

### BRIEF SUMMARY

In the conventional processing system, the handling device and each processing part need to be accurately positioned, which is troublesome to install.

An object of the present invention is to provide a processing system having a plurality of processing machine units that can be easily installed.

A first aspect of the present invention provides a processing system, including:
a processing chamber unit configured to accommodate a workpiece, the processing chamber unit including,
   a wall portion having a window, and
   a conveyor surrounded by the wall portion, the conveyor configured to grip and convey the workpiece to a processing position opposing to the window; and
a processing machine unit disposed to cover the window, the processing machine unit including a processing part configured to process the workpiece located at the processing position through the window.

For example, the workpiece is made of metal. The metal constituting the workpiece is, for example, an aluminum alloy, a magnesium alloy, titanium, a titanium alloy, a heat-resistant alloy, or steel. The workpiece is, for example, a mechanical part. The mechanical part is, for example, an automotive part.

Both the processing chamber unit and the processing machine unit can be transported in unit. However, a single unit may be dividable into a plurality of sections.

The wall portion surrounds the conveyor. The processing chamber unit may include a ceiling portion on an upper side of the wall portion. The processing chamber unit may not include a ceiling portion. Preferably, the processing chamber unit includes a lower surface portion on a lower side of the wall portion.

The wall portion may be columnar as a whole. The wall portion may be formed by combining a plurality of planar walls. For example, the wall portion may have a rectangular tubular shape. The wall portion may be formed of a curved wall. For example, the wall portion may be cylindrical. The wall portion may be formed by combining a planar wall and a curved wall.

The window of the wall portion is formed by opening a part of the wall portion. The window has a size and a shape to allow the processing part of the processing machine unit to pass through. In the case where the processing part moves, the window may have a size or a shape corresponding to the moving area of the processing part.

The conveyor grips the workpiece. For example, the conveyor fixes a workpiece with a fastener such as a bolt or a clamp, or fixes the workpiece by sandwiching the workpiece. The conveyor moves the gripped workpiece. The conveyor may rotate the workpiece. The conveyor is, for example, an index table. The conveyor may translate the workpiece. The conveyor is, for example, a pallet or a belt conveyor. When the processing chamber unit has a lower surface portion, the conveyor may be disposed on the lower surface portion. In the case where the processing chamber unit does not have the lower surface portion, for example, the conveyor may be attached to a beam member, and the beam member may be fixed to the wall portion.

The number of processing machine units may be the same as the number of windows in the wall portion of the processing chamber unit. The number of processing machine units may be less than the number of windows. In this case, the window which is not covered by the processing machine unit may be covered by another covering member. The processing machine unit may include one or more processing parts.

The processing part performs cutting, grinding, electric discharge machining, laser machining, and the like. The workpiece may be processed by moving the workpiece into the processing chamber unit through the window. The processing part may include, for example, a spindle and a tool attached to the spindle. Each processing part may perform the same type of processing. Each processing part may perform a different type of processing.

The workpiece is processed by the processing part through the window at the processing position. The processing position may be different depending on the type of the processing part of the machining machine unit. One processing position may face the plurality of windows. In this case, the workpiece may be simultaneously processed by the processing parts of the plurality of processing machine units.

The cover portion prevents chips and coolant from scattering from the processing chamber to the processing machine unit through the window. Preferably, when the window is viewed from the processing chamber, only the processing part among the components other than the cover portion of the processing machine unit is exposed from the cover portion. Preferably, the cover portion covers other areas of the processing machine unit. When the processing part moves, the cover portion may expand or contract in accordance with the movement of the processing part. The cover portion is, for example, a bellows, a telescopic cover, or a roll cover.

If the processing part includes a spindle and a tool, the processing machine unit may include an automatic tool changer (ATC). The ATC may be located closer to the processing chamber unit than the wall portion. The ATC may be located in the exchange chamber through the window. The partition wall may substantially completely divide the space surrounded by the wall portion. The partition wall may not completely divide the space surrounded by the wall portion, and may leave a gap. The partition wall may have a communication portion such as a door or a window that communicates with the processing chamber and the exchange chamber. The receiving portion may collect chips and coolant.

The protruding wall of the processing machine unit may have a tool exchange port for the ATC to exchange the tool of the spindle. The ATC may partially protrude through the tool exchange port into the area where the spindle is provided. The ATC may include a shutter that closes the tool exchange port during processing period (during non-tool exchanging period).

The processing chamber may have a loading port and/or an unloading port. The loading port and the unloading port are located in the wall portion or the ceiling portion. The loading port and the unloading port may be positioned continuously from the wall portion to the ceiling portion. The loading port and the unloading port may have an opening and closing unit. The opening and closing unit opens and closes the loading port and the unloading port. The opening and closing unit is, for example, a shutter or a door.

According to the present invention, it is possible to provide a processing system including a plurality of processing machine units that can be easily installed.

### BRIEF DESCRIPTION OF DRAWINGS

FIG. 1 is a plan view of a processing system according to a first embodiment.
FIG. 2 is a perspective view of the processing system according to the first embodiment.
FIG. 3 is a perspective view of the processing system according to the first embodiment.
FIG. 4 is a perspective view of a processing chamber unit according to the first embodiment.
FIG. 5 is a perspective view of a processing machine unit according to the first embodiment.
FIG. 6 is a perspective view of the processing system according to the first embodiment.
FIG. 7 is a perspective view of the processing system according to the first embodiment.
FIG. 8 is a plan view showing an example of dividing the processing chamber unit according to the first embodiment.
FIG. 9 is a plan view showing an example of dividing the processing chamber unit according to the first embodiment.
FIG. 10 is a plan view of a processing system according to a second embodiment.

### DETAILED DESCRIPTION

### First Embodiment

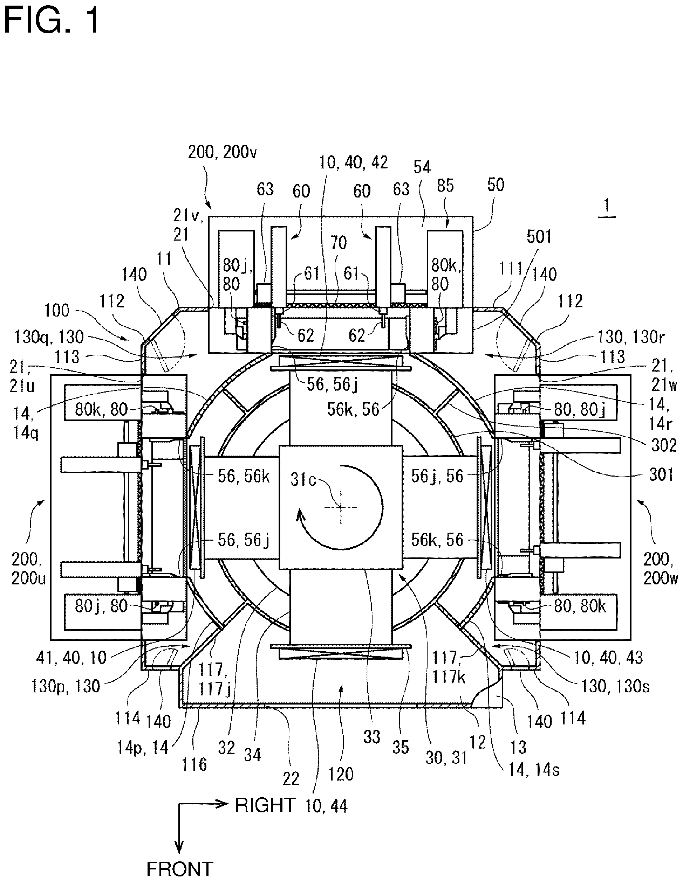

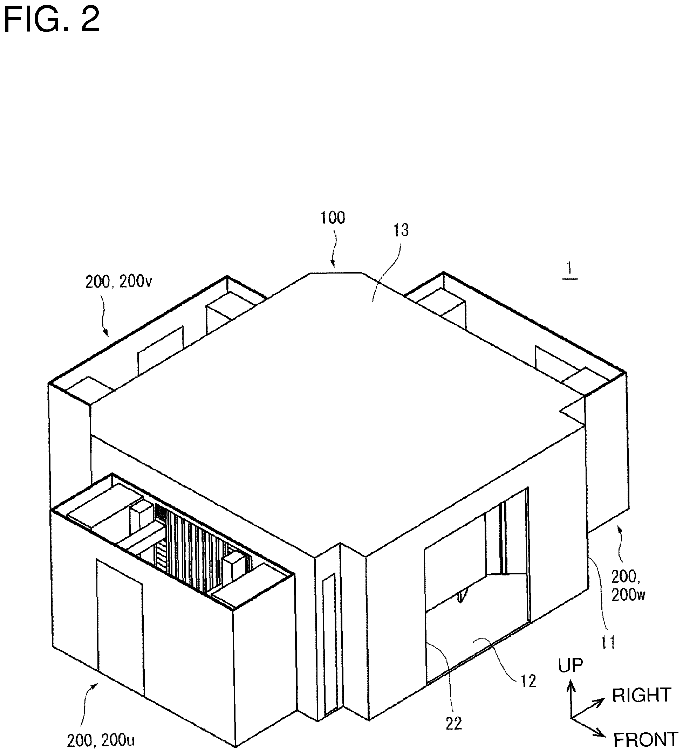

As shown in FIGs. 1 and 2, a processing system 1 according to the present embodiment includes a single processing chamber unit 100 and a plurality (three in the present embodiment) of processing machine units 200. The respective processing machine units 200 are referred to as processing machine units 200u, 200v, and 200w. The processing machine units 200 are substantially identical to each other. The processing chamber unit 100 is located in the center. The processing machine units 200 are arranged in three directions around the processing chamber unit 100. The downward direction in FIG. 1 indicates a frontward direction. The processing machine units 200 are disposed on the left side, the rear side, and the right side of the processing chamber unit 100.

As shown in FIGs. 1 to 4, the processing chamber unit 100 has a polygonal prism shape. The processing chamber unit 100 includes a wall portion 11, a lower surface portion 12, a ceiling portion 13, an inner wall 117, a window 21, a loading port 22, a conveyor 30, a partition wall 14, and a door 140. In FIGs. 1, 3, and 4, the ceiling portion 13 is removed. The conveyor 30 includes a rotary conveyor 31. The rotary conveyor 31 rotates a workpiece 10. The rotary conveyor 31 includes a rotation axis 31c, a table 32, a support column 33, a support arm 34, a grip 35, four arcuate walls 301, and four rotary walls 302.

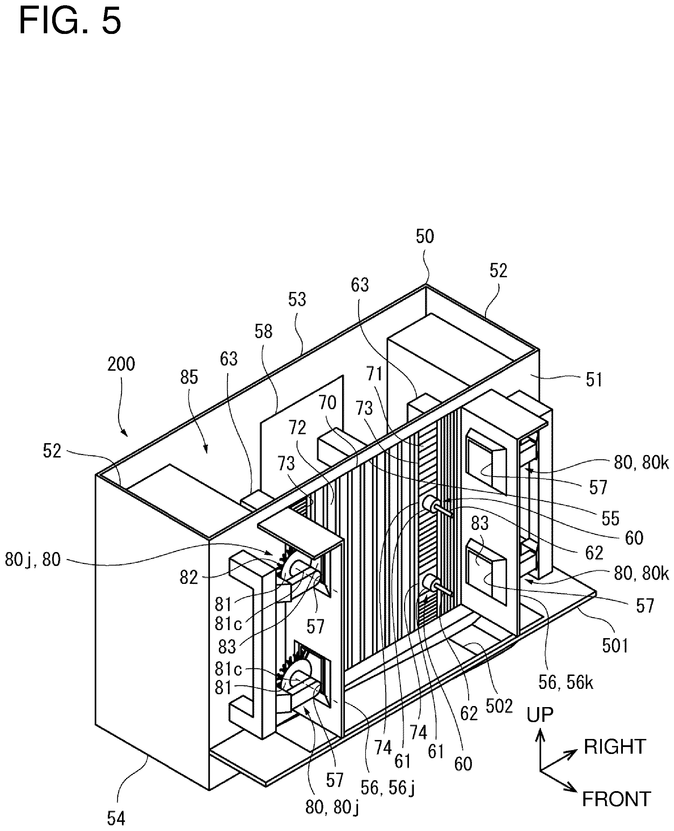

As shown in FIGs. 1 and 5, the processing machine unit 200 includes a housing 50, a pair of columns 63, four processing parts 60, a bellows (cover portion) 70, an automatic tool changer (ATC) 80, a machinery part 85, a pair of protruding walls 56, and a receiving portion 501. The protruding wall 56 has a tool exchange port 57.

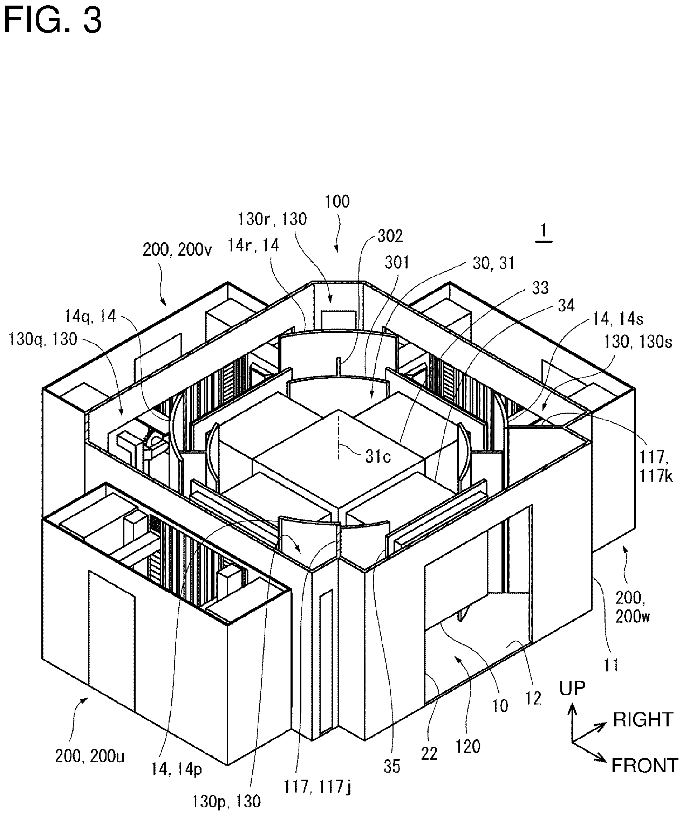

As shown in FIGs. 1 and 3, an internal space of the processing chamber unit 100 is partitioned into one processing chamber 120 and four exchange chambers 130. The respective exchange chambers 130 are referred to as exchange chambers 130p, 130q, 130r, and 130s. The exchange chamber 130 is defined by the wall portion 11, the partition wall 14, the protruding wall 56, and the inner wall 117. The exchange chambers 130 are disposed at four corners of the processing chamber unit 100. The processing chamber 120 is a region excluding the exchange chambers 130 from the processing chamber unit 100. The processing chamber 120 accommodates the conveyor 30 and the workpiece 10.

The wall portion 11 has a columnar shape as a whole. The wall portion 11 includes a rear wall 111, a front wall 116, a side wall 113, an inclined wall 112, and a corner wall 114. The rear wall 111 and the front wall 116 extend in the lateral direction. The side wall 113 extends in the front-rear direction. The length in the front-rear direction of the side wall 113 and the length in the lateral direction of the rear wall 111 are substantially equal to each other. The inclined wall 112 is inclined with respect to the lateral direction. The inclined wall 112 is connected to the rear wall 111 and the side wall 113. The corner wall 114 has an in-corner shape. The corner wall 114 is connected to the front wall 116 and the side wall 113.

The lower surface portion 12 extends horizontally. The lower surface portion 12 is connected to the lower end of the wall portion 11. The lower surface portion 12 closes the lower opening of the wall portion 11. The lower surface portion 12 is spaced apart from an installation surface.

The ceiling portion 13 extends horizontally. The ceiling portion 13 is connected to the upper end of the wall portion 11. The ceiling portion 13 closes the upper opening of the wall portion 11.

The inner wall 117 includes inner walls 117j, 117k. The inner wall 117 extends from the corner of the corner wall 114 toward the inside of the processing chamber 120. The inner wall 117 extends toward the rotation axis 31c of the rotary conveyor 31. The height of the inner wall 117 is substantially equal to the height of the corner wall 114.

The respective windows 21 are referred to as windows 21u, 21v, 21w. The windows 21 are located on the left side, the rear side, and the right side of the processing chamber 120. The window 21 is a rectangular opening extending in a vertical and lateral direction. The windows 21 are disposed in a central portion of the rear wall 111 and the side walls 113.

The loading port 22 is located on the front wall 116. The loading port 22 is a rectangular opening. The loading port 22 extends largely on the front wall 116. The workpiece 10 is carried into and out of the processing chamber 120 from the loading port 22. An operator may enter and exit the processing chamber 120 from the loading port 22.

The loading port 22 may be located on the ceiling portion 13. Further, the loading port 22 may be located continuously from the front wall 116 to the ceiling portion 13.

The conveyor 30 is disposed inside the processing chamber 120. The conveyor 30 is disposed on the lower surface portion 12. The table 32 is an index table. The table 32 is rotated about the rotation axis 31c by a rotation driving device (not shown). The support columns 33 are arranged on the table 32. The support columns 33 extend upwardly from the table 32. The rotary conveyor 31 has the same number (four in the embodiment) of support arms 34 and grips 35 as the number of indexes of the table 32. The plurality of support arms 34 and the grips 35 are evenly arranged around the rotation axis 31c. The support arm 34 extends radially outward from the support column 33. The grip 35 is disposed at a distal end of each support arm 34. The grip 35 has, for example, a rectangular plate extending in the vertical direction. The grip 35 grips the workpiece 10. The grip 35 includes a fastener such as a bolt and a clamp. The workpiece 10 is, for example, an EV battery case. When the workpiece 10 has a flat plate shape, the grip 35 grips the workpiece 10 in a vertical posture.

Note that the support column 33 and the support arm 34 may have a hollow structure. The support column 33 and the support arm 34 may have a frame structure. The shape and structure of the grip 35 are appropriately modified according to the workpiece 10.

The arcuate wall 301 is disposed between two adjacent support arms 34. The arcuate wall 301 forms a part of a cylindrical surface having the rotation axis 31c as a center axis. In the height direction, the arcuate wall 301 extends in at least a wider range than the workpiece 10. The rotary wall 302 extends radially outward from the arcuate wall 301. The rotary wall 302 extends in a direction by 45 degrees from the support arm 34 about the rotation axis 31c. The height of the rotary wall 302 may be the same as the height of the arcuate wall 301.

For example, the rotary conveyor 31 rotates clockwise in a plan view. When the table 32 is indexed, each grip 35 faces the window 21. The position of the grip 35 and the workpiece 10 facing the window 21 is defined as a processing position 40. The position of the workpiece 10 facing the window 21u is referred to as a first processing position 41. The position of the workpiece 10 facing the window 21v is referred to as a second processing position 42. The position of the workpiece 10 facing the window 21w is referred to as a third processing position 43. The conveyor 30 conveys the workpiece 10 to the processing position 40 facing the window 21.

When the table 32 is indexed, the workpiece 10 gripped by the grip 35 located on the front faces the loading port 22. The position of the grip 35 and the workpiece 10 facing the loading port 22 is referred to as a loading position 44.

The partition wall 14 surrounds the conveyor 30. The partition walls 14 are disposed at four corners of the processing chamber unit 100. The respective partition walls 14 are referred to as partition walls 14p, 14q, 14r, 14s. The partition wall 14p is connected to the inner wall 117j. The partition wall 14s is connected to the inner wall 117k. The partition wall 14 each forms a part of a cylindrical surface having the rotation axis 31c as a center axis. The partition wall 14 extends from the lower surface portion 12 to the ceiling portion 13. The inner peripheral surface of the partition wall 14 is slightly spaced apart from the distal end of the rotary wall 302. The rotary wall 302 and the partition wall 14 form a rotating door structure. An inner peripheral surface of the partition wall 14 forms a gap from the workpiece 10 gripped by the grip 35. The partition wall 14 is not in contact with the rotary conveyor 31. The partition wall 14 may have a communication portion (not shown). The communicating portion is an opening. A door and a shutter are disposed on the communication portion.

The door 140 is arranged in each exchange chamber 130. The door 140 is disposed, for example, on the inclined wall 112 or the corner wall 114. An operator can enter the exchange chamber 130 through the door 140.

The processing machine unit 200 will be described with reference to FIG. 5. The upper right direction in FIG. 5 indicates the right direction. The right lower direction in FIG. 5 indicates the front direction. The upward direction in FIG. 5 indicates the upward direction.

The machinery part 85 is located inside the housing 50 and behind the bellows 70. The machinery part 85 drives the processing part 60.

The housing 50 has a rectangular parallelepiped shape that opens upward. The housing 50 includes a housing front surface 51, a housing lateral surface 52, a housing rear surface 53, a housing lower surface 54, a housing window 55, and a door 58.

The housing front surface 51 and the housing rear surface 53 extend in the lateral direction. The housing lateral surface 52 extends in the front-rear direction. The housing lateral surface 52 is connected to the housing front surface 51 and the housing rear surface 53.

The housing lower surface 54 extends in the horizontal direction. The housing lower surface 54 is connected to the lower ends of the housing front surface 51, the housing lateral surface 52, and the housing rear surface 53. The housing lower surface 54 is spaced apart from the installation surface.

The housing window 55 is located in a central portion of the housing front surface 51. The housing window 55 is a rectangular opening.

The door 58 is disposed on the housing lateral surface 52 or the housing rear surface 53. The operator may enter and exit through the door 58. The housing 50 may include an inspection door (not shown). The inspection door (not shown) is disposed on the housing lateral surface 52 or the housing rear surface 53.

Each processing part 60 includes a spindle 61 and a tool 62.

The pair of columns 63 are arranged side by side in the machinery part 85. Each column 63 extends in the vertical direction. Each column 63 moves toward the lateral direction. Two spindles 61 are arranged vertically side by side on the right side surface of the left column 63. Two spindles 61 are arranged vertically side by side on the left side surface of the right column 63. The spindle 61 is movable in the front-rear direction and vertical direction along the column 63.

The spindle 61 and the processing part 60 extend in the front-rear direction. The front portion of the spindle 61 partially protrudes into the processing chamber 120 through the housing window 55. The spindle 61 is translated in the vertical direction, in the horizontal direction, and in the front-rear direction in an area inside the housing window 55. The tool 62 is attached to the spindle 61.

The bellows 70 covers the entire surface of the housing window 55. The bellows 70 defines the machinery part 85 and the processing chamber 120. The bellows 70 includes a pair of lateral moving boxes 73, four vertical moving boxes 74, a vertical bellows 71, and a lateral bellows 72.

Each of the lateral moving boxes 73 extends in the vertical direction. The lateral moving box 73 moves in the lateral direction integrally with the column 63. The two vertical moving boxes 74 are arranged vertically side by side in the lateral moving boxes 73. Each vertical moving box 74 moves in the vertical direction inside the lateral moving box 73. Each processing part 60 passes through the vertical moving box 74. The lateral bellows 72 are disposed between the left and right ends of the housing window 55 and the lateral moving box 73, and between the pair of lateral moving boxes 73. The vertical bellows 71 are disposed between the lateral moving box 73 and the vertical moving box 74, and between the two vertical moving boxes 74.

The processing machine unit 200 includes a pair of upper and lower ATCs 80j and a pair of upper and lower ATCs 80k. The ATC 80j, 80k corresponds to the respective processing parts 60. The ATC 80 includes a magazine disk 81, a plurality of tool holding portions 82, and a shutter 83.

The magazine disk 81 is disposed at the left and right ends of the housing window 55. The magazine disk 81, which has a disk shape, is rotatable about a center shaft 81c. The magazine disk 81 is disposed in front of the housing front surface 51. The center shaft 81c extends in the front-rear direction. The magazine disk 81 indexes one of the tool holding portions 82 at a tool exchange position (not shown). The tool exchange position is a position closer to the spindle 61 in the horizontal direction.

The tool holding portions 82 are arranged in the circumferential direction on the outer peripheral portion of the magazine disk 81. The tool holding portion 82 clamps and holds the tool 62. The shutter 83 is disposed in a part of the magazine disk 81 in the circumferential direction. The shutter 83 has substantially the same shape as the tool exchange port 57. The ATC 80 exchanges the tool 62 with the spindle 61.

The protruding walls 56 are disposed on the left and right of the housing front surface 51 of the housing 50. The respective protruding walls 56 are referred to as the protruding walls 56j, 56k. The protruding wall 56, which has a rectangular flat plate shape, extends in the vertical direction. The protruding wall 56 protrudes frontward through the housing window 55. The protruding wall 56j is disposed on the left end of the housing window 55 and on the right side of the ATC 80j. The protruding wall 56k is disposed on the right end of the housing window 55 and on the left side of the ATC 80k.

The tool exchange ports 57, each of which has a rectangular opening, are disposed upper and lower portions of the protruding wall 56. The tool exchange port 57 is located at substantially the same height as the center shaft 81c. The tool holding portion 82 located at the tool exchange position protrudes into the processing chamber 120 through the tool exchange port 57. When the shutter 83 is indexed to the exchange position, the shutter 83 closes the tool exchange port 57.

The receiving portion 501, which has a rectangular flat plate shape, is disposed on the lower side of the processing part 60 in the housing front surface 51. The receiving portion 501 has a discharge port 502. The receiving portion 501 extends horizontally. The receiving portion 501 substantially abuts the lower end of the protruding wall 56. The receiving portion 501 has substantially the same length in the front-rear direction as the protruding wall 56. The receiving portion 501 has substantially the same length in the lateral direction as the housing front surface 51. The receiving portion 501 may have a slope down towards the discharge port 502. The discharge port 502 discharges chips and coolant that have fallen on the receiving portion 501.

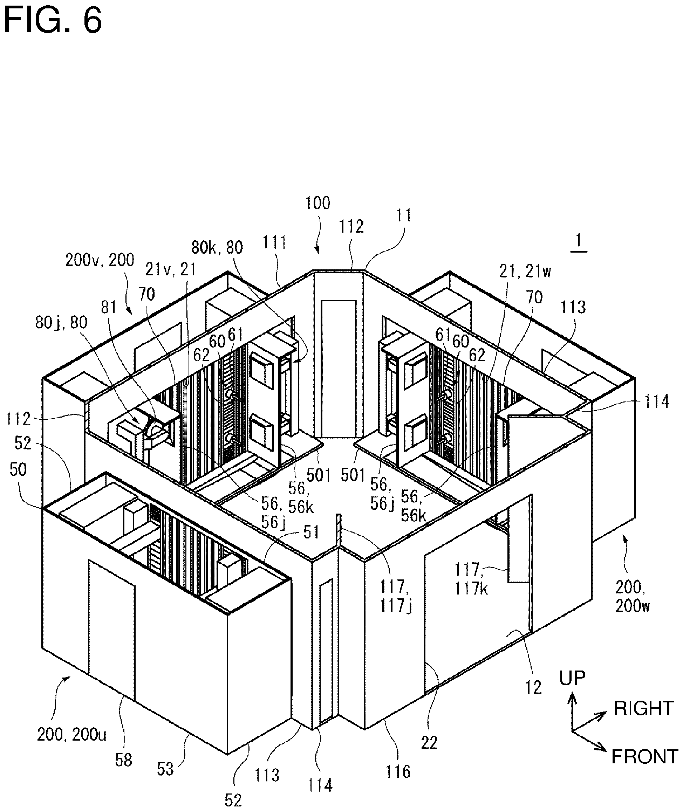

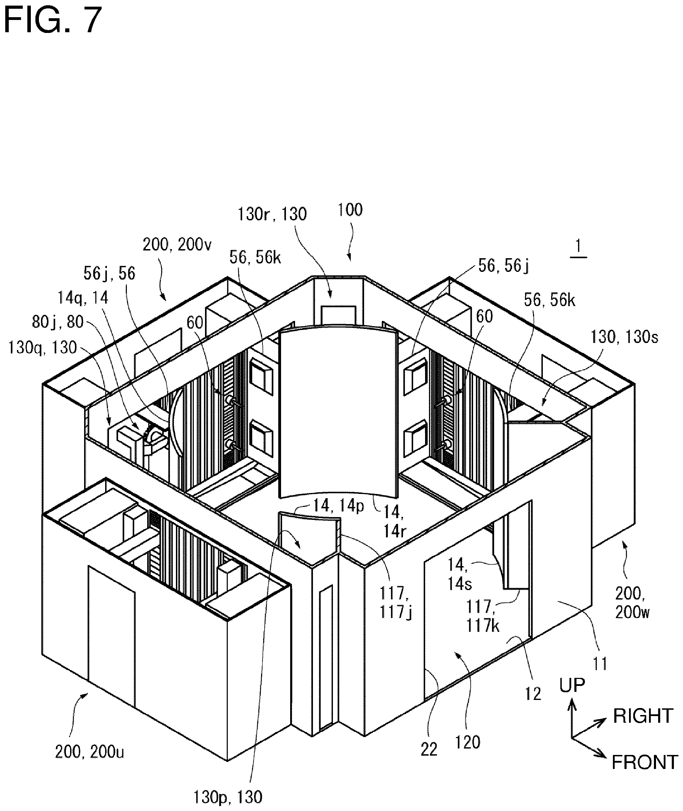

As shown in FIGs. 1, 6, and 7, each processing machine unit 200 is disposed on the processing chamber unit 100 so as to close the window 21. The plurality of processing machine units 200 are arranged along a circumference around the rotation axis 31c. In FIG. 6 and FIG. 7, the ceiling portion 13 and all the elements disposed in the processing chamber unit 100 are omitted. The housing front surface 51 is in contact with the rear wall 111 or the side wall 113 of the processing chamber unit 100. The protruding wall 56 and the receiving portion 501 protrude into the processing chamber unit 100 through the window 21. The protruding wall 56j of the processing machine unit 200u is connected to the partition wall 14p. The protruding wall 56k of the processing machine unit 200u and the protruding wall 56j of the processing machine unit 200v are connected to the partition wall 14q. The partition walls 14r, 14s are substantially the same as the partition walls 14q, 14p, respectively. The processing machine unit 200v, 200w are substantially the same as the processing machine unit 200u.

The processing part 60 (the spindle 61 and the tool 62) faces the processing chamber 120 through the window 21. The processing part 60 faces the workpiece 10 at the processing position 40 through the window 21. The processing part 60 processes the workpiece 10 at the processing position 40. When the window 21 is viewed from the processing chamber 120, only the processing part 60 among the components other than the bellows 70 of each processing machine unit 200 is exposed, and the other regions are covered with the bellows 70. The bellows 70 covers substantially the entire face of the window 21. The processing part 60 and the bellows 70 cooperate to cover substantially the entire face of the window 21.

The ATC 80 faces the exchange chamber 130 through the windows 21. The ATC 80 of the adjacent processing machine units 200 face the exchange chamber 130q. The ATC 80j of the processing machine unit 200v and the ATC 80k of the processing machine unit 200u face the exchange chamber 130q. The exchange chamber 130r is substantially the same as the exchange chamber 130q. The ATC 80j of the processing machine unit 200u faces the exchange chamber 130p. The exchange chamber 130s is substantially the same as the exchange chamber 130p.

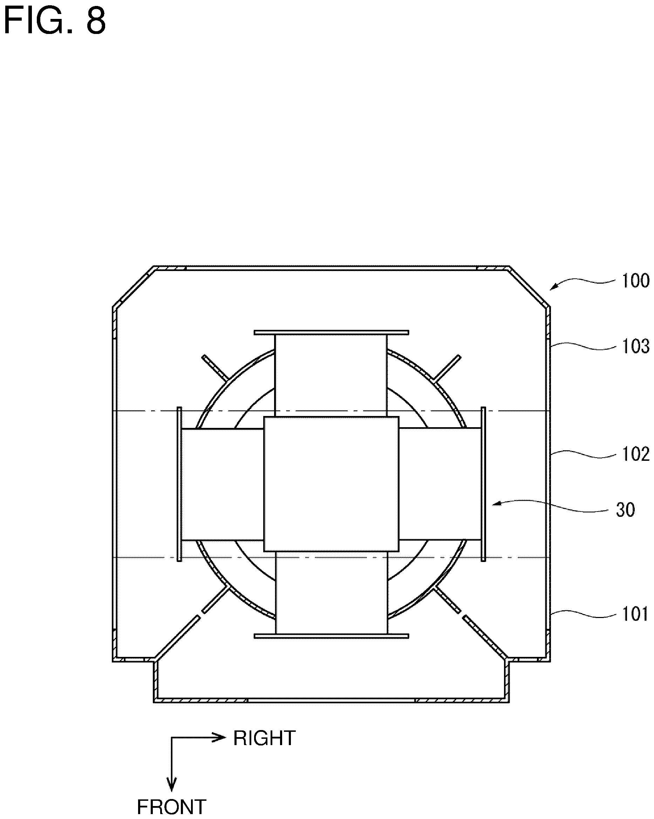

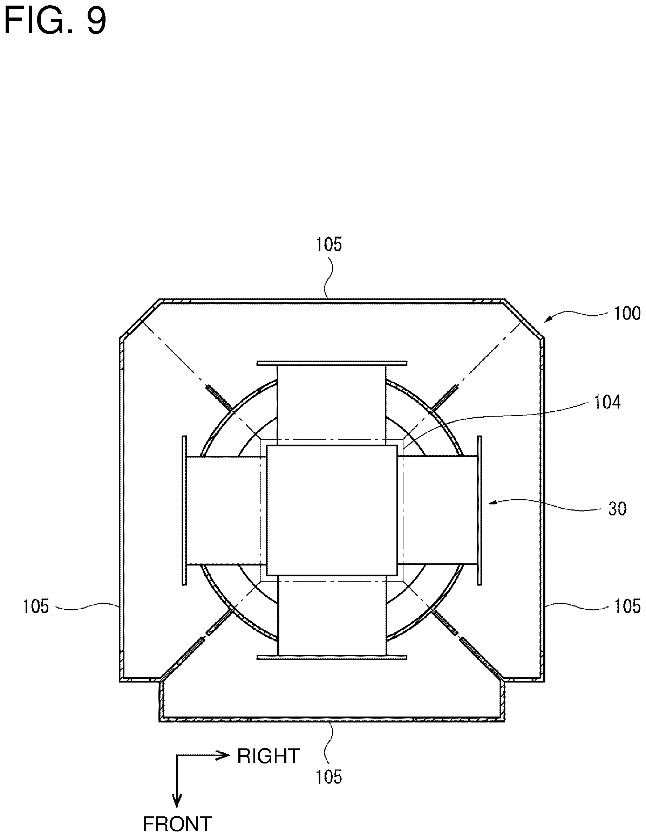

The processing chamber unit 100 may be dividable into a plurality of sections. The form of the division can be appropriately selected according to the convenience of transportation and storage of the processing system 1. In FIGs. 8 and 9, the dividing line is indicated by a dashed-dotted line.

As shown in FIG. 8, the processing chamber unit 100 may be equally divided into three sections in the front-rear direction by two straight lines extending in the lateral direction. The processing chamber unit 100 is thus divided into a front portion 101, an intermediate portion 102, and a rear portion 103. The conveyor 30 is integrally disposed with the intermediate portion 102. The front portion 101 and the rear portion 103 may be integrally formed with the intermediate portion 102 to be accommodated in the intermediate portion 102.

As shown in FIG. 9, the processing chamber unit 100 may be divided into a central portion 104 and a plurality (four in the example shown in FIG. 9) of peripheral portions 105. The central portion 104 is square when viewed from above. The peripheral portion 105 is divided by four straight lines extending radially from the central portion 104. The conveyor 30 is integrally disposed with the central portion 104.

A processing method for the workpiece 10 by the processing system 1 will be described.

First, the workpiece 10 is carried into the processing chamber 120 through the loading port 22. Then, the grip 35 grips the workpiece 10 at the loading position 44.

The table 32 is then rotated 90 degrees clockwise. The workpiece 10 thus moves to the first processing position 41. Four processing parts 60 of the processing machine unit 200u perform processing on the workpiece 10 at the first processing position 41.

The table 32 is then rotated 90 degrees clockwise. The workpiece 10 thus moves to the second processing position 42. Four processing parts 60 of the processing machine unit 200v perform processing on the workpiece 10 at the second processing position 42.

The table 32 is then rotated 90 degrees clockwise. The workpiece 10 thus moves to the third processing position 43. Four processing parts 60 of the processing machine unit 200w perform processing on the workpiece 10 at the third processing position 43.

The table 32 is then rotated 90 degrees clockwise. The workpiece 10 thus moves to the loading position 44. The workpiece 10 at the loading position 44 is detached from the grip 35. The workpiece 10 is then carried out from the loading port 22 to the outside of the processing chamber 120.

During processing by the respective processing machine units 200, the tool 62 of the spindle 61 is exchanged by the ATC 80 as needed. When the operator performs maintenance or the like on the ATC 80, the operator can enter the exchange chamber 130 through the door 140. The chips and coolant (hereinafter, referred to as chips and the like) generated by the processing of the workpiece 10 fall to the receiving portion 501 located downward from the processing part 60. The chips and the like are then flowed along the gradient of the receiving portion 501 to be collected to a chip recovery device (not shown). The chips and the like may be collected in the processing chamber unit 100. The chips and the like may be collected by the respective processing machine units 200. As the processing chamber 120 and the exchange chamber 130 are partitioned by the partition wall 14, scattering of chips and the like generated in the processing chamber 120 to the ATC 80 is suppressed. The rotary wall 302 and the partition wall 14 form a rotating door structure. A space in which the workpieces 10 adjacent to each other exist in the processing chamber 120 is partitioned by the rotary wall 302. This thus prevents chips and the like generated by the processing of the workpiece 10 from scattering to the adjacent workpiece 10.

According to the processing system 1 of the present embodiment, by installing the processing machine unit 200 in accordance with the window 21, the processing part 60 faces the processing position 40 of the workpiece 10. This facilitates the positioning operation during installation.

The processing chamber unit 100 includes the wall portion 11 and the window 21. The processing machine unit 200 has the bellows 70. When the processing machine unit 200 is connected to the processing chamber unit 100, the window 21 is covered with the bellows 70. This constitutes a splash cover. The machinery part 85 can be separated from the inside of the processing chamber 120. Thus, this allows a liquid machining coolant to be used in the processing part 60.

The processing chamber unit 100 includes the partition wall 14 and the inner wall 117. The processing machine unit 200 has the protruding wall 56. When the processing machine unit 200 is connected to the processing chamber unit 100, the partition wall 14 and the inner wall 117 are connected to the protruding wall 56. This forms the processing chamber 120 and the exchange chamber 130. This suppresses the chips and coolant generated in the processing chamber 120 from flowing into the exchange chamber 130.

The processing chamber unit 100 includes the partition wall 14, the inner wall 117, and the conveyor 30. The processing machine unit 200 includes the machinery part 85, the processing part 60, the ATC 80, and the receiving portion 501. Elements around the processing part 60 are concentrated in the processing machine unit 200, and elements related to the conveyor 30 and the processing chamber 120 are concentrated in the processing chamber unit 100. This allows the processing system 1 to be easily disassembled, transported and reassembled.

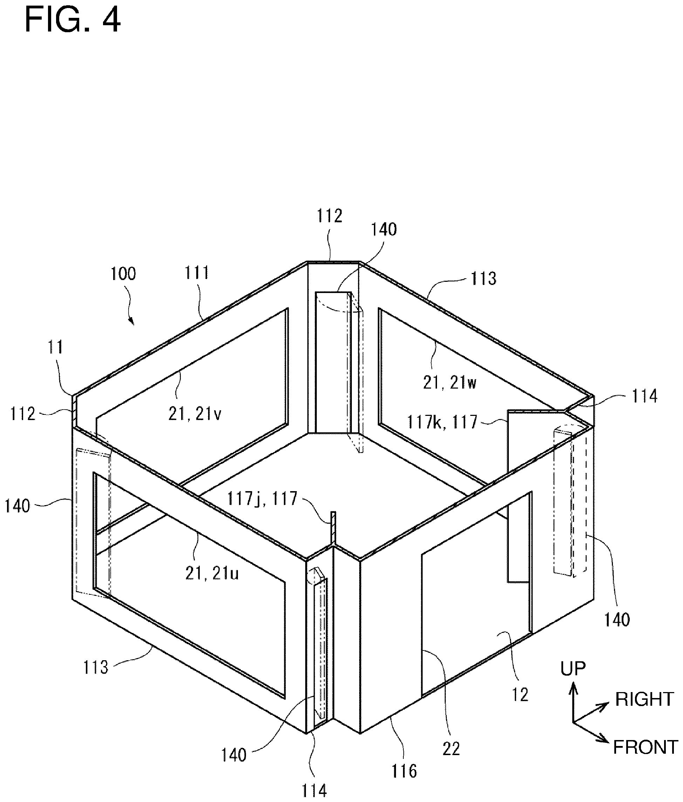

The plurality of processing machine units 200 have common structures. The processing machine unit 200 includes a plurality of common components such as the column 63, the processing part 60, the ATC 80, and the protruding wall 56. The processing chamber unit 100 and the rotary conveyor 31 are also composed of a plurality (four sets in FIG. 4) sets of common components. This allows to reduce the number of common components and the number of inventories required for the processing system 1. Maintenance is also facilitated.

The door 140 faces the exchange chamber 130. The ATC 80 is disposed in the exchange chamber 130. The operator can enter the exchange chamber 130 through the door 140. This allows the operator to maintain the ATC 80 and replace the tool 62. When the communication portion is located on the partition wall 14, the operator can maintain the rotary conveyor 31 through the communication portion. As a plurality (two or four in FIG. 1) of the ATCs 80 are concentrated in a single exchange chamber 130, maintenance is facilitated.

The electrification of the automobile requires an increasing demand for processing large components. Large workpieces in the form of flat plate or tray are increasing. As the conveyor 30 of the present embodiment can install the workpiece 10 upright, the installation area of the processing system 1 can be reduced.

By changing the shape and structure of the processing chamber unit 100 and the arrangement of the processing machine unit 200, the layout and processing capability of the machine can be easily changed.

### Second Embodiment

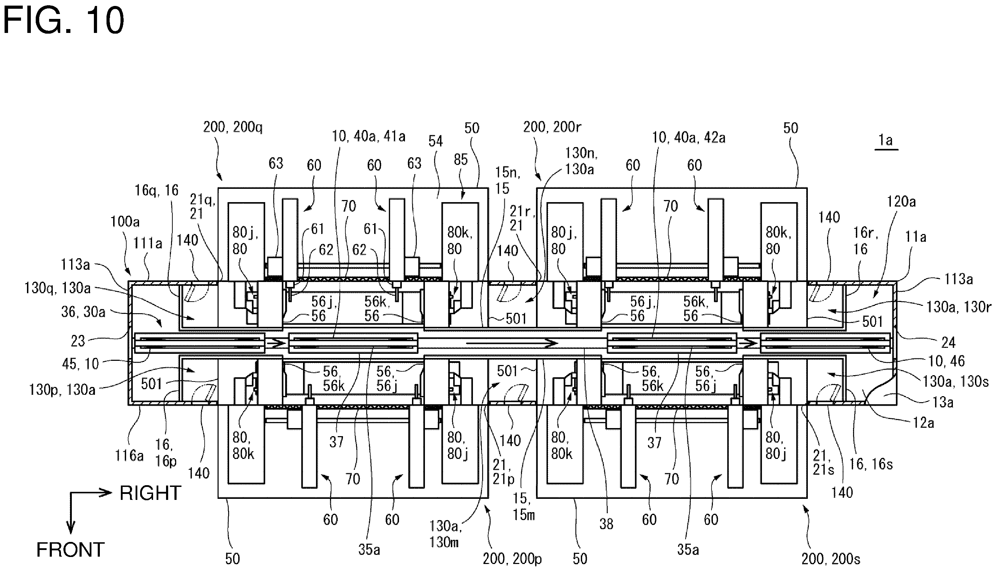

As shown in FIG. 10, a processing system 1a according to the present embodiment includes a single processing chamber unit 100a and a plurality (four in the present embodiment) of processing machine units 200. The respective processing machine units 200 are referred to as the processing machine units 200p, 200q, 200r, 200s. The downward direction in FIG. 10 indicates the frontward direction. Two processing machine units 200 are arranged side by side in the front and the rear of the processing chamber unit 100a, respectively.

As shown in FIG. 10, the processing chamber unit 100a includes a wall portion 11a, a lower surface portion 12a, a ceiling portion 13a, a window 21, a loading port 23, a unloading port 24, a conveyor 30a, and a partition wall (a central partition wall 15 and an end partition wall 16). In FIG. 10, the ceiling portion 13a is removed.

The area surrounded by the wall portion 11a, the central partition wall 15, the end partition wall 16, and the protruding wall 56 is referred to as an exchange chamber 130a. Within the inner space of the processing chamber unit 100a, the portion except the exchange chamber 130a is referred to as the processing chamber 120a. The exchange chambers 130a are arranged at a central front portion, a central rear portion, a left front portion, a right front portion, a left rear portion, and a right rear portion in the processing chamber unit 100a. The respective exchange chambers 130a are referred to as the exchange chambers 130m, 130n, 130p, 130q, 130r, 130s. The processing chamber 120a accommodates the conveyor 30a and the workpiece 10.

The wall portion 11a has a quadrangular prism shape elongated in the lateral direction. The wall portion 11a includes a rear wall 111a, a side wall 113a, and a front wall 116a. The rear wall 111a and the front wall 116a extend in the lateral direction. The rear wall 111a is substantially the same as the front wall 116a. The side wall 113a extends in the front-rear direction. The side wall 113a is connected to the rear wall 111a and the front wall 116a. The length in the lateral direction of the front wall 116a and the rear wall 111a is sufficiently longer than the length in the front-rear direction of the side wall 113a.

The lower surface portion 12a and the ceiling portion 13a extend horizontally. The lower surface portion 12a is connected to the lower end of the wall portion 11a. The ceiling portion 13a is connected to the upper end of the wall portion 11a.

The windows 21 are arranged side by side on the front wall 116a and the rear wall 111a. The respective windows 21 are referred to as the windows 21p, 21q, 21r, 21s.

The loading port 23 is located on the left side wall 113a. The unloading port 24 is located on the right side wall 113a. The loading port 23 and the unloading port 24 may include a shutter.

The loading port 23 and the unloading port 24 may be located on the ceiling portion 13. Further, the loading port 23 and the unloading port 24 may be located continuous from the wall portion 11a to the ceiling portion 13a.

The conveyor 30a is disposed in a central portion of the processing chamber 120a. The conveyor 30a is disposed on the lower surface portion 12a. The conveyor 30a includes a translational conveyor 36. The translational conveyor 36 translates the workpiece 10. The translational conveyor 36 includes a pallet 37, a rail 38, and a grip 35a. The rail 38, which is disposed on the lower surface portion 12a, extends from the left end to the right end of the processing chamber 120a. The rail 38 may extend outwardly of the processing chamber 120a. The pallet 37 is translated along the rail 38 by a translational driving device (not shown). The translational conveyor 36 may include a plurality of pallets 37. The translational driving device is arranged along the rail 38. The grip 35a is arranged on the pallet 37.

The pallet 37 translates to the right in a plan view. The pallet 37 is translated so that the grip 35a faces the windows 21. The position of the grip 35a or the workpiece 10 facing the windows 21 is referred to as a processing position 40a. The processing position 40a includes a first processing position 41a and a second processing position 42a. The first processing position 41a is located between the window 21p and the window 21q. The second processing position 42a is located between the window 21r and the window 21s.

At the left end of the rail 38, the workpiece 10 faces the loading port 23. This position is referred to as a loading position 45. At the right end of the rail 38, the workpiece 10 faces the unloading port 24. This position is referred to as an unloading position 46.

The central partition walls 15 are disposed in the front and the rear in the middle of the processing chamber unit 100a. Each central partition wall 15 extends to in the lateral direction. The respective central partition walls 15 are referred to as central partition walls 15m, 15n.

The end partition walls 16 are located at four corners of the processing chamber unit 100a. The end partition wall 16 is L-shaped in a plan view. The respective end partition walls 16 are referred to as end partition walls 16p, 16q, 16r, 16s. One face of the end partition wall 16p extends in the front-rear direction to be connected to the front wall 116a, and the other face extends in the lateral direction. The end partition walls 16q, 16r, 16s are substantially the same as the end partition wall 16p.

The central partition wall 15 and the end partition wall 16 extend from the lower surface portion 12a to the ceiling portion 13a. The central partition wall 15 and the end partition wall 16 are spaced apart from the workpiece 10 that translates the translational conveyor 36.

The processing machine units 200 are disposed in each window 21. The processing machine units 200 are arranged along the moving direction of the translational conveyor 36. The protruding wall 56 and the receiving portion 501 protrude into the processing chamber 120a through the window 21 on the wall portion 11a. On the central front side of the processing chamber unit 100a, the protruding wall 56j and the protruding wall 56k are connected to the central partition wall 15m. The central rear side of the processing chamber unit 100a is also substantially the same as the central front side. On the left front side of the processing chamber unit 100a, the protruding wall 56k is connected to the end partition wall 16p. The left rear side, the right rear side, and the right front side of the processing chamber unit 100a are also substantially the same as the left front side.

The processing part 60 processes the workpiece 10 at the processing position 40a through the window 21.

The ATC 80 of the respective processing machine units 200 face the exchange chambers 130 through the windows 21. A plurality of the ATCs 80 of adjacent processing machine units 200 face the exchange chamber 130m. The ATC 80j of the processing machine unit 200p and the ATC 80k of the processing machine unit 200s face the exchange chamber 130m. The exchange chamber 130n is substantially the same as the exchange chamber 130m. Further, the ATC 80k of the processing machine unit 200p faces the exchange chamber 130p. The exchange chamber 130q, the exchange chamber 130r, and the exchange chamber 130s are substantially the same as the exchange chamber 130p.

The processing chamber unit 100a may include a door 140. The door 140 is disposed in the respective exchange chambers 130a. The door 140 is arranged, for example, on the front wall 116a or the rear wall 111a.

The processing chamber unit 100a may be dividable into a plurality of sections. The form of the division can be appropriately set according to the convenience of transportation and storage of the processing system 1a.

A processing method of the workpiece 10 by the processing system 1a will be described.

First, the workpiece 10 is carried into the processing chamber 120a through the loading port 23. The workpiece 10 is then gripped by the grip 35a at the loading position 45.

The pallet 37 of the translational conveyor 36 is then translated to the right. The workpiece 10 thus moves to the first processing position 41a. For the workpiece 10 at the first processing position 41a, the four processing parts 60 of the processing machine unit 200p and the four processing parts 60 of the processing machine unit 200q perform processing from both front and rear sides.

The pallet 37 of the translational conveyor 36 is then translated to the right. The workpiece 10 thus moves to the second processing position 42a. For the workpiece 10 at the second processing position 42a, the four processing parts 60 of the processing machine unit 200s and the four processing parts 60 of the processing machine unit 200r perform processing from both front and rear sides.

The pallet 37 of the translational conveyor 36 is then translated to the right. The workpiece 10 thus moves to the unloading position 46. The workpiece 10 at the unloading position 46 is detached from the grip 35a. The workpiece 10 is thus unloaded from the unloading port 24 to the outside of the processing chamber 120a.

The processing system 1a of the present embodiment can be installed in an elongated installation area.

The present invention is not limited to the above-described embodiments, and various modifications can be made without departing from the gist of the present invention, and all technical matters included in the technical idea described in the claims are the subject of the present invention. While the above embodiments have been shown by way of example, those skilled in the art will recognize that various alternatives, modifications, variations, and improvements can be made from the disclosure herein, which fall within the scope of the appended claims.

### Reference Signs List

10 Workpiece
11, 11a Wall portion
14 Partition wall
15 Central partition wall
16 End partition wall
21 Window
30, 30a Conveyor
31 Rotary conveyor
36 Translational conveyor
40, 40a Processing position
56 Protruding wall
60 Processing part
61 Spindle
62 Tool
70 Bellows (Cover portion)
80 Automatic tool changer (ATC)
100, 100a Processing chamber unit
120, 120a Processing chamber
130, 130a Exchange chamber
140 Door
200 Processing machine unit
501 Receiving portion

## Claims

1. A processing system (1), comprising:
a processing chamber unit (100) configured to accommodate a workpiece (10), the processing chamber unit (100) including,
a wall portion (11) having a window (21), and
a conveyor (30) surrounded by the wall portion (11), the conveyor (30) configured to grip and convey the workpiece (10) to a processing position (40) opposing to the window (21); and
a processing machine unit (200) disposed to cover the window (21), the processing machine unit (200) including a processing part (60) configured to process the workpiece (10) located at the processing position (40) through the window (21).

2. The processing system (1) according to claim 1, wherein
the wall portion (11) includes a plurality of the windows (21),
the processing system (1) further comprising:
a plurality of the processing machine units (200) each disposed to the corresponding windows (21).

3. The processing system (1) according to claim 1 or 2, wherein
the processing machine unit (200) includes a cover portion (70) through which the processing part (60) passes, the cover portion (70) covering substantially entire face of the window (21).

4. The processing system (1) according to any one of claims 1 to 3, wherein
the processing chamber unit (100) includes a partition wall (14) partitioning a region surrounded by the wall portion (11) into a processing chamber (120) and an exchange chamber (130),
the processing part (60) includes a spindle (61) to which a tool (62) is attachable, the spindle (61) facing the processing chamber (120) through the window (21), and
the processing machine unit (200) includes an automatic tool changer (80) facing the exchange chamber (130) through the window (21), the automatic tool changer (80) configured to exchange the tool (62).

5. The processing system (1) according to claim 4, wherein
the processing machine unit (200) includes a protruding wall (56) protruding into a region surrounded by the wall portion (11) through the window (21), the protruding wall (56) partitioning the region surrounded by the wall portion (11) into the processing chamber (120) and the exchange chamber (130) together with the partition wall (14), and
the partition wall (14) is connected to a distal end of the protruding wall (56).

6. The processing system (1) according to any one of claims 1 to 5, wherein
the automatic tool changers (80) of the adjacent processing machine units (200) face a single exchange chamber (130).

7. The processing system (1) according to any one of claims 1 to 6, wherein
the processing machine unit (200) includes a receiving portion (501) disposed below the processing part (60), the receiving portion (501) passing through the window (21).

8. The processing system (1) according to any one of claims 1 to 7, wherein
the conveyor (30) includes a rotary conveyor (31) configured to rotate the workpiece (10) about a rotation axis (31c), and
the processing machine units (200) are arranged in a circumferential direction about the rotation axis (3 1c).

9. The processing system (1a) according to any one of claims 1 to 7, wherein
the conveyor (30a) includes a translational conveyor (36) configured to translate the workpiece (10), and
the processing machine units (200) are arranged along a moving direction of the translational conveyor (36).

10. The processing system (1) according to any one of claims 1 to 9, wherein
a single processing position (40) faces a plurality of the windows (21).

11. The processing system (1) according to any one of claims 4 to 10, wherein
the processing chamber unit (100) includes a door (140) disposed on the wall portion (11) for an operator to enter the exchange chamber (130).

12. The processing system (1) according to any one of claims 1 to 11, wherein
the processing chamber unit (100) is dividable into a plurality of sections.
